# EUROPEAN PATENT APPLICATION

(11) **EP 4 297 262 A1**
(43) Date of publication of application: **27.12.2023**
(21) Application number: 22180166.5
(22) Date of filing: 21.06.2022
(51) Int. Cl.: H02M 3/335, H02M 3/158, H02M 1/00, H02M 1/36, H02M 1/32

(54) **MULTI-FUNCTIONAL SOLID STATE SWITCHING CIRCUIT**

(71) Applicant: Airbus S.A.S., 31700 Blagnac (FR)
(72) Inventor: STEINER, Gerhard, 82024 Taufkirchen (DE); KAPAUN, Florian, 82024 Taufkirchen (DE)
(74) Representative: OTN Airbus SAS

(57) **Abstract**

A switching circuit (100) for connecting an electrical energy source (110) to a consumer and an aircraft (300) comprising such a switching circuit (100) are provided. The switching circuit (100) comprises a controller (190), a first interface (101, 102), a second interface (103, 104), a first half bridge circuit (120), a bypass circuit (140), and a choke (170).

The first half bridge circuit (120) comprises first and second electronic switches (121, 122) connected in series between a first connection line (101) and a second connection line (102) of the first interface (101, 102). The choke (170) is connected to a first node (123) between the first electronic switch (121) and the second electronic switch (122) and connects the first node (123) to a first connection line (103) of the second interface (103, 104). A second connection line (104) of the second interface (103, 104) is connected to a second node (124) between the second electronic switch (122) and a second connection line (102) of the first interface (101, 102). The bypass circuit (140) comprises a third electronic switch (141) that bypasses the first electronic switch (121) and the choke (170). The controller (190) controls each of the first to third electronic switches (121, 122, 141), such that the switching circuit (100) operates in one of a pre-charging operation mode, a current limiting operation mode, and a short-circuit protection mode.

## Description

### TECHNICAL FIELD

The present disclosure relates to switching circuits for controlling current flow between an electrical energy source and a consumer. The disclosure further relates to an aircraft having such a switching circuit.

### TECHNICAL BACKGROUND

When starting up electrical consumers connected to electrical energy sources, large inrush currents may occur because, for example, the input capacities are loaded at the beginning. Therefore, in order to avoid driving the electrical energy source into overload caused by these inrush currents, the input capacities need to be pre-charged before the consumer may operate within regular, static operation. For energy sources like batteries and fuel cells, avoiding such overload or short-circuit states of the energy source may be necessary to ensure safe operation.

In aircraft applications, alternative energy sources such as DC batteries and fuels cells are increasingly used in light of the environmental protection efforts. Especially for such applications, safe operation of any system is important. Currently, in order to avoid high inrush currents or short circuits, pre-charging circuits are used which employ regular power contactors and fuses, wherein a pre-charging bypass having a high resistance bypasses a main contactor, in order to suppress high currents. Such solutions are used mainly in automotive applications. In these resistor-based solutions, the resistance has to be precisely adapted to the load to be driven. Further, the used fuses and contactors have to be precisely matched to ensure protection to overload and short circuit over the whole operational range. The resistors are further usually designed for a single pre-charge event with a quite long time to cool down. In aircraft applications, in order to fulfill the weight requirements, these drawbacks are even more disadvantageous. Multiple activations of the pre-charge circuit in short times will lead to overload of the resistor. Additionally, a short circuit in combination with a powerful energy source may lead to overload and/or damage of the contactor and the battery before the fuse is blown.

Further, usually, fully semiconductor based solutions show much higher losses compared to the contactor solutions due to the relatively high ON-state resistance. Hybrid solutions (parallel connected semiconductors and contactors) do not have a losses problem due to parallel connected contactors. However, because of the contactor, no current limiting functionality is given until the deactivation of the contactor. Therefore, an energy source may be driven in overload or even short circuited for this time. Hence, such solutions are often used in combination with current limited energy sources (e.g. photovoltaic) or in combination with series inductances to decrease the peak current in case of a failure to a manageable value (e.g., in commercial networks). In case an inductance is used, the stored energy has to be manageable by a voltage limiting device, usually a big varistor. However, such varistors degrade over time with each activation cycle.

### DESCRIPTION

It is an objective to provide a switching circuit having a fast short-circuit protection and pre-charging functionality.

This objective is solved by the subject matter of the independent claims. Further embodiments are described in the dependent claims as well as in the following description.

According to a first aspect, a switching circuit for connecting an electrical energy source to a consumer is provided. The switching circuit comprises a controller, a first interface with a first connection line and a second connection line, a second interface with a first connection line and a second connection line, a first half bridge circuit, a bypass circuit, and a choke. The first half bridge circuit comprises a first electronic switch and a second electronic switch connected in series between the first connection line and the second connection line of the first interface. The choke is connected to a first node between the first electronic switch and the second electronic switch, and connects the first node to the first connection line of the second interface, such that the first electronic switch, the second electronic switch and the choke together build a buck converter. The second connection line of the second interface is connected to a second node between the second electronic switch and the second connection line of the first interface. The bypass circuit comprises a third electronic switch that bypasses the first electronic switch and the choke, thereby interconnecting the first connection line of the first interface and the first connection line of the second interface. The controller is connected with each of the first to third electronic switches and is configured to control operation of the electronic switches, such that the switching circuit operates in one of a pre-charging operation mode, a current-limiting operation mode, and a short-circuit protection mode.

In general, a consumer connected to an electrical energy source, such as a battery or fuel cell, draws higher currents during start up. This may, for example, result from the consumer having certain input capacities which are uncharged at the beginning. However, other consumer without any input capacities may also draw higher currents during start up, such as when the consumer has a temperature dependent resistance. Therefore, the consumer, e.g., by charging the input capacities or by the consumer reaching a state with constant or nearly constant resistance, needs to be charged first before the current flow from the power source through the consumer normalizes itself with regard to the demanded power of the consumer. In order to avoid such large inrush currents, during a pre-charge time period, the current flow needs to be limited. To allow the consumer to operate normally after the pre-charge period has expired, the current limitation needs to be stopped once the normalized state is achieved. Further, driving the electrical energy source into overload, e.g., by a short circuit state within the consumer, has to be avoided. Since short circuit states lead to a steep and fast increase in current, corresponding switching circuits need to operate very fast and reliable.

The switching circuit of the present disclosure utilizes electronic switches that generally allow fast transition between the conductive state and non-conductive state of the corresponding electronic switches and may be any fast-switching electronic switches. The bypass circuit of the switching circuit is used for lowering the losses during regular operation of the consumer, i.e., when no current limitation is necessary or desired, and allows the consumer to be driven as if it was directly connected to the electrical energy source.

The switching circuit further utilizes a first half bridge circuit and a choke that act as a buck converter which limits the current flow between the electrical energy source and the consumer, depending on the switching states of the first to third electronic switches. This allows for effective short-circuit protection, since, if a short-circuit is detected (e.g., by means of a current signal from a current sensor), fast transition between the short-circuit protection mode and the current-limiting operation mode or the pre-charging operation mode is possible.

The first interface corresponds to an input interface into the switching circuit. If, for example, the electrical energy source for which the switching circuit is used is a DC energy source, the first connection line of the first interface corresponds to a positive input line, which may be connected to a positive output terminal of the electrical energy source, and the second connection line of the first interface corresponds to a negative input line, which may be connected to a negative output terminal of the electrical energy source.

The first half bridge circuit comprises the first electronic switch and the second electronic switch. The first electronic switch and the second electronic switch are connected in series between the first connection line of the first interface and the second connection line of the first interface, such that when both switches are in an electrically conducting state, an electrical current could in principle flow directly between the first connection line and the second connection line of the first interface. If the first electronic switch or the second electronic switch is in a non-conductive state, direct current flow between the first connection line and the second connection line is blocked.

The second interface corresponds to an output interface of the switching circuit which may be connected to an electrical consumer. If the consumer is a DC device, the first connection line of the second interface corresponds to a positive output line, which may be connected to a positive input terminal of the consumer, and the second connection line of the second interface corresponds to a negative output line, which may be connected to a negative input terminal of the consumer.

The choke may be any device suitable to store energy and block higher-frequency alternating currents while passing direct current (DC) and lower-frequencies alternating current (AC), such as a suitable inductor. The choke is connected to the first node between the first electronic switch and the second electronic switch and connects this node with the first connection line of the second interface. The second connection line of the second interface (i.e., the negative output line) is connected to the second node, which is located between the second switch and the second connection line of the first interface (i.e., the negative input line). When a consumer is connected to the second interface, the first half bridge circuit together with the choke builds a buck or step-down converter that limits a current flow between the first interface and the second interface, if the first to third switches are controlled appropriately, as will be described further below.

The third electronic switch is an electronic switch having a very low resistance when in a conductive state, in particular much lower than the resistance of the buck converter. Therefore, if the third electronic switch is in a conductive state (i.e., the switch is closed), the third electronic switch bypasses the buck converter and (because of the low resistance) most of the current will flow through the bypass circuit directly between the first connection line of the first interface and the first connection line of the second interface, instead of through the buck converter. Hence, when the third electronic switch is in a conductive state, the consumer is directly connected with the electrical energy source regardless of the switching state of the first electronic switch and the second electronic switch. This state defines the short-circuit protection mode.

Further, in the short-circuit protection mode, a current flowing through the switching circuit is monitored by the controller, e.g., by means of a current sensor. If a measured current is higher than a defined short-circuit threshold, the switching circuit may switch to the pre-charging operation mode or the current-limiting operation mode in order to limit the current amplitude. Since in the short-circuit protection mode the current (or at least most of the current) flows through the bypass circuit regardless of the switching state of the buck converter (defined by the switching states of the first electronic switch and the second electronic switch), the buck converter may be constantly kept active in the pre-charging operation mode or the current-limiting operation mode. Further, the first electronic switch of the buck converter may be constantly in a conductive state while the second electronic switch of the buck converter may be constantly in a non-conductive state. This allows for fast switching back to the pre-charging operation mode or the current-limiting operation mode in case of a short-circuit or other circuit error simply by opening the third electronic switch and starting to control the first electronic switch and the second electronic switch in an alternating manner, as described further below.

The pre-charging operation mode and the current-limiting operation mode both correspond to operation modes in which current flow between the electrical energy source and the consumer is limited. In either of these operation modes, the third electronic switch is in a non-conducting state, which is why current can only flow through the buck converter. These operation modes are distinguished from each other by the amplitude of the allowable current. In particular, the current-limiting operation mode allows a larger current than the pre-charging operation mode.

The pre-charging operation mode limits current flow to an allowable pre-charging current for charging the consumer, as described above. The corresponding switching states of the first to third electronic switches in the corresponding operation modes will be described further below. In particular, in either of the pre-charging operation mode and the current-limiting operation mode, the third switch is in a non-conductive state, i.e., in an open state. However, the pre-charging operation mode corresponds to an operation mode that can, in principle, be used without any time restriction or limit, whereas the current-limiting operation mode may only be used up until a defined time limit has expired without causing damage to components. The current-limiting operation mode therefore can be used to handle short-time peak power values.

If a short-circuit is detected, the switching circuit may also first switch to the current-limiting operation mode (allowing a higher but nevertheless limited current) and may switch to the pre-charging operation mode afterwards. In this way, the current may be slowly reduced down to a safe level. At the safe level, the consumer may be disconnected from the circuit, e.g., by a main contactor.

Also, when starting up, the consumer current may be slowly ramped up. The consumer may first be pre-charged in the pre-charging operation mode. Once pre-charged, the switching circuit may either first transition to the current-limiting operation mode or may directly transition to the short-circuit protection mode, which corresponds to the normal operation mode. When in the pre-charging operation mode, the third switch is in a non-conductive state and the full current flows through the buck converter (first half bridge circuit together with the choke). The amplitude of the current flowing through the buck converter may be controlled by appropriately controlling the first electronic switch and the second electronic switch.

The controller is connected to each of the first, second and third electronic switch and controls the switching states of these electronic switches, e.g., by sending corresponding control signals. For example, if the switches are MOSFETs or other semiconductor switches, as described further below, the controller controls the corresponding gate voltages of these MOSFETs. The controller may be any device capable of receiving and analyzing signals, such as current signals, and controlling the electronic switches by means of controls signals. The controller may, for example, be a discrete circuit, an integrated circuit, an FPGA, an ASIC, a general purpose computer having a CPU and memory components, or any other suitable device. Further, the controller may be connected to or integrated into other superordinate control systems, such as those in an aircraft cockpit.

The switching circuit may be used for connecting a non-rechargeable electrical energy source, such as a fuel cell, to a consumer. In such configurations, the switching circuit controls current flow unidirectional or unipolar from the electrical energy source (via the first interface as input interface) to the consumer (via the second interface as output interface) only. The consumer may, for example, be an electric motor or any other electrical consumer. However, as described further below with regard to certain embodiments, the switching circuit may also be operational to control current flow bidirectional. In such embodiments, the consumer may, for example, be an electrical generator unit and the electrical energy source may be a rechargeable battery or other rechargeable electrical energy storage device. In such embodiments, the first interface and the second interface may both function as input interface and output interface, depending on the direction of current flowing through the switching circuit.

When in the pre-charging operation mode or the current-limiting operation mode, the third switch is in a non-conductive state and the full current flows through the buck converter. The amplitude of the current flowing through the buck converter may be controlled by appropriately controlling the first electronic switch and the second electronic switch.

According to an embodiment, when in the pre-charging operation mode, the controller is configured to operate the third electronic switch in an electrically non-conductive state and simultaneously open and close the first electronic switch and the second electronic switch inversely to each other with a pre-charging duty cycle, that is self-regulated by the current control so that a current flowing through the switching circuit between the first interface and the second interface is limited to a pre-charging threshold. When in the current-limiting operation mode, the controller is configured to operate the third electronic switch in an electrically non-conductive state and simultaneously open and close the first electronic switch and the second electronic switch inversely to each other with a current-limit duty cycle, that is self-regulated by the current control so that a current flowing through the switching circuit between the first interface and the second interface is limited to a current-limit threshold. The current-limit threshold is higher than the pre-charging threshold. When in the short-circuit protection mode, the controller is configured to operate the third electronic switch in an electrically conductive state and to operate the first electronic switch and the second electronic switch in a corresponding switching state according to one of the pre-charging operation mode and the current-limiting operation mode, or to keep the first electronic switch in a conductive state and to keep the second electronic switch in a non-conductive state.

As described above, in the pre-charging operation mode and the current-limiting operation mode, the third electronic switch is in an open or electrically non-conductive state. Therefore, the full current flows through the buck converter built by the first electronic switch, the second electronic switch and the choke.

Depending on the switching states of the first and second electronic switches, the amplitude of the current through the buck converter can be controlled. This is achieved by controlling the first electronic switch and the second electronic switch periodically with a corresponding duty cycle, wherein the duty cycle depends on the desired current amplitude and other conditions, such as a voltage difference between the electrical energy source and the consumer. The first electronic switch and the second electronic switch are operated inversely to each other when in the pre-charging operation mode or the current-limiting operation mode, meaning at any time when the first electronic switch is in an open or conductive state, the second electronic switch is in a closed or non-conductive state and vice versa. The first and second electronic switch are opened and closed in this way periodically. The duty cycle corresponds to the relative amount of time within a certain time frame during which each of the first and second electronic switches are in a conductive state. The higher the duty cycle of the first electronic switch (meaning the first electronic switch is conductive for a larger amount of time within the time frame while the second electronic switch is conductive for the rest of the time when the first electronic witch is non-conductive), the higher the current flowing through the buck converter. Therefore, by adjusting the duty cycle, the current value may be adjusted. This cyclic switching introduces alternating current (AC current) components. However, if the consumer comprises an input capacity, the choke together with the input capacity of the consumer acts as a low pass filter, filtering out the AC components and letting the DC component pass.

When the first electronic switch is closed, the inductivity of the choke is charged. When the first electronic switch opens and the second electronic switch closes, the energy stored in the inductivity unloads as current. Thereby, the back current is conducted through the second electronic switch back to the second connection line of the first interface into the electrical energy source. The forward current is used to power the consumer. Therefore, a higher duty cycle leads to a higher current through the consumer. Opening the second electronic switch when the first electronic switch is closed is necessary because otherwise the electrical energy source would be short-circuited.

The pre-charging operation mode and the current-limiting operation mode are defined by the current allowed through the buck converter. This current may be proportional to the duty cycle but also depends on other conditions, such as the voltage between the electrical energy source and the consumer. Therefore, the pre-charging duty cycle is lower than the current-limit duty cycle.

In the short-circuit protection mode, the third electronic switch is closed and bypasses the buck converter. Since the resistance of the bypass circuit is lower than the resistance of the buck converter, most of the current flows directly from the electrical energy source through the consumer back to the electrical energy source. If a short-circuit is detected when in the short-circuit protection mode, the switching circuit may immediately fall back to the pre-charging operation mode or the current-limiting operation mode of the buck converter by opening the third electronic switch and operating the first electronic switch and the second electronic switch according to one of these operation modes. Because the electronic switches are electronically controlled, such a transition can happen very fast, protecting the electrical energy source from overcurrent events.

According to another embodiment, the controller is configured to start in the pre-charging operation mode and to transition from the pre-charging operation mode to the short-circuit protection mode when a voltage between the first connection line and the second connection line of the second interface becomes equal to a voltage between the first connection line and the second connection line of the first interface.

As described above, in the pre-charging operation mode, current flow between the first interface and the second interface is limited to a pre-charging threshold. This allows for the consumer to slowly charge without driving the electrical energy source into overload because of large inrush currents that would otherwise occur. For example, the switching states of the first to third electronic switches may first be controlled according to the pre-charging operation mode before connecting the consumer to the second interface. The consumer may, for example, be connected via a main contactor that is closed. Because of the limited current, such a main contactor may be a purely mechanical contactor. The limited current increases the lifetime of such a switch because sparks and increased heat that may lead to welding of the contactor can be avoided and the overall requirements for such a contactor are relaxed.

Equalization of the voltage between the output interface (second interface) and the input interface (first interface) indicates that the consumer is fully pre-charged. Therefore, the switching circuit may transition to the short-circuit protection mode, in which the consumer is directly connected to the electrical energy source via the third electronic switch of the bypass circuit. However, as an intermediate step, the controller may also first switch the switching circuit from the pre-charging operation mode to the current-limiting operation mode before switching to the short-circuit protection mode.

If desired, the switching circuit may also transition to the current-limiting operation mode, in order to limit the current flow during regular operation. To this end, the controller may for example receive corresponding instructions from a user. Further, if the controller receives signals (e.g., from a current sensor) indicating that the overall current in an electrical network, part of which the switching circuit may be, is too high, the switching circuit, by means of the controller, may automatically transition to the current-limiting operation mode. This may happen during startup but also during regular operation in the short-circuit protection mode.

When a consumer is to be powered down or removed from the electrical network, the switching circuit may operate in the reverse order by transitioning from the short-circuit protection mode either directly to the pre-charging operation mode or intermediately to the current-limiting operation mode and afterwards to the pre-charging operation mode. According to another embodiment, when in the short-circuit protection mode, the controller is configured to transition to the pre-charging operation mode when a current through the switching circuit reaches a short-circuit threshold.

For example, a current sensor may monitor the current flowing through the circuit and may send corresponding measurement signals to the controller. If a short circuit in the consumer or anywhere in the circuit occurs, current flow will increase very fast. Once a predefined threshold, the short-circuit threshold is reached, the controller will determine that a short circuit has occurred and will change the switching states of the first to third electronic switches to the corresponding states for the pre-charging operation mode, which, as described above, corresponds to an operation mode, where current flow is limited to a low level. The defective consumer may then be turned off (e.g., by safely opening a mechanical main contactor) and removed from the circuit. In particular, when switching to the pre-charging operation mode, the third switch will be opened and the first electronic switch and the second electronic switch will be opened and closed periodically and inversely to each other as described further above.

According to another embodiment, when in the short-circuit protection mode, the controller is configured to transition to the current-limiting operation mode and remain in the current-limiting operation mode up to a predefined time limit, when a current through the switching circuit reaches a defined current threshold and operation with limited current is allowed for the time defined by the time limit.

If, for example, the power demand of the consumer increases above the regular level, such that it becomes too high for the electrical network to be fully allowed, the switching circuit may transition to the current-limiting operation mode and may start a timer. This allows the consumer to keep operating for a defined time limit with limited but still higher current than in the pre-charging mode. As described above, the current-limiting mode is not possible continuously because otherwise the switching circuit may overheat. However, if, for example, there is a problem within the consumer that steeply increases the power consumption and therefore the drawn current, the current-limiting mode may allow the consumer to keep operating for a certain amount of time before being powered down, so that it does not drop out immediately.

According to another embodiment, at least one of the first electronic switch, the second electronic switch and the third electronic switch is a solid-state switch.

The solid-state switch may be any solid-state switch known in the art that allows for fast changing of switching states. For example, the solid-state switch may be realized by using a JFET (junction-gate field-effect transistor), MOSFET, a SiC FET, an IGBT or any other suitable semiconductor technology. However, these are only examples of electronic switches, and any other electronic switch may be used that is suitable for the switching circuit.

Compared to regular (e.g., mechanical) contactor switches, the electronic switches offer the advantage that the main functionality of the switching circuit can be controlled purely electronically. Further, solid-state switches offer fast reaction and switching times as compared to regular contactor switches, which is important because short circuits and similar failure states are accompanied by steep current slopes. Therefore, for example, when a short circuit occurs and is detected by the controller, the third electronic switch may be transitioned into a non-conductive state in a very short time, enabling to limit the current amplitude quickly before driving the electrical energy source into a short circuit state.

The reaction times of regular contactor switches may not be fast enough to avoid driving the electrical energy source into short circuit. Additionally, regular fuses also have a slow reaction time compared to electronic switches during which time the electrical energy source is in a short circuit state. These drawbacks are avoided by the disclosed switching circuit utilizing fast solid-state switches or electronic switches in general.

In embodiments described further below having additional electronic switches to the first, second and third electronic switches, these switches may also use any suitable semiconductor technology, such as, for example, JFETs, MOSFETs, SiC FETs, IGBTs. However, it should be noted that these are only examples of suitable semiconductor technologies. In general, any suitable semiconductor technology can be used. Any property described with regard to the first, second and third electronic switch may equally apply to the fourth, fifth and sixth electronic switches described further below.

According to another embodiment, the solid-state switch comprises a metal-oxide-semiconductor field-effect transistor, MOSFET.

The MOSFET may be any type of MOSFET known in the art, such as p-type and n-type MOSFETs. Further, the MOSFETs may be normally open (depletion mode).

According to another embodiment, the solid-state switch comprises a silicon carbide field-effect transistor, SiC FET.

Such SiC FETs offer fast switching times and are preferred for the switching circuit. Preferably, a wide bandgap SiC FET is used.

According to another embodiment, the solid-state switch comprises an insulated gate bipolar transistor, IGBT.

According to another embodiment, the third electronic switch comprises a semiconductor switch having a very low drain-source on resistance, RDS(on).

The drain-source on resistance (RDS(on)) describes the resistance of a semiconductor switch between the drain and the source terminal of the switch when the switch is in an electrically conductive state, i.e., when the switch is closed. When in the short-circuit protection mode, current between the first interface and the second interface should ideally only be conducted directly via the bypass circuit. Because every electric and electronic component comprises an electrical resistance, this is not perfectly possible in reality. However, by choosing an electronic switch having a very low RDS(on) compared to the electronic switches in the first half bridge circuit, only a small part of the current flows through the buck converter and most of the current flows via the bypass circuit. Therefore, the lower der RDS(on) of the third electronic switch, the closer the switching circuit comes to the ideal state when in the short-circuit protection mode.

According to another embodiment, the switching circuit further comprises a second half bridge circuit comprising a fourth electronic switch and a fifth electronic switch, and the bypass circuit further comprises a sixth electronic switch in a anti-serial connection with the third electronic switch in order to allow blocking of current flow in both current flow directions. The fourth electronic switch is connected between the choke and the first connection line of the second interface. The fifth electronic switch connects a third node between the choke and the fourth electronic switch with a fourth node between the second connection line of the second interface and the second node. The bypass circuit further bypasses the fourth electronic switch. The controller further is configured to control operation of the fourth electronic switch, the fifth electronic switch and the sixth electronic switch.

The fourth, fifth and sixth electronic switch may be similar to the first, second and third electronic switch. Using a second half bridge circuit (comprising the fourth and fifth electronic switches) and a sixth electronic switch in the bypass circuit enables bidirectional operation of the switching circuit. For example, if the first interface is connected to a rechargeable electrical energy source, such as a rechargeable battery, and the second interface is connected to a combined motor-generator unit, the battery can power the motor-generator unit in a motoring mode and the motor-generator unit can recharge the battery when in a generator mode. However, this is only one example. The switching circuit may be used for any application where bidirectional energy flow is necessary or desired.

In this way, if, for example, the switching circuit is configured to conduct electrical power from the first interface to the second interface and the voltage at the first interface is higher than the voltage at the second interface, the fourth electronic switch permanently is in the conductive state, and the fifth electronic switch permanently is in the non-conductive state. The sixth electronic switch is in the same switching state as the third electronic switch at any time. The first to third electronic switch may then be controlled as described above with regard to embodiments without the second half bridge and without the sixth electronic switch. If, however, the voltage at the first interface is lower than the voltage at the second interface, the switching circuit may instead be operated as a step-up converter. In this case, the first electronic switch permanently is in the conductive state, and the second electronic switch permanently is in the non-conductive state. The third electronic switch again is in the same switching state as the sixth electronic switch at any time. The fourth to sixth electronic switch may then be controlled just as the first to third electronic switch in embodiments without the second half bridge.

If the switching circuit is configured to conduct electrical power from the second interface to the first interface and the voltage at the second interface is higher than the voltage at the first interface, the first electronic switch permanently is in the conductive state, and the second electronic switch permanently is in the non-conductive state. The third electronic switch is in the same switching state as the sixth electronic switch at any time. The fourth to sixth electronic switch may then be controlled as the first to third electronic switch in embodiments without the second half bridge circuit. If, however, the voltage at the second interface is lower than the voltage at the first interface, the switching circuit may instead be operated as a step-up converter. In this case, the fourth electronic switch permanently is in the conductive state, and the fifth electronic switch permanently is in the non-conductive state. The sixth electronic switch again is in the same switching state as the third electronic switch at any time. The first to third electronic switch may then be controlled just as the first to third electronic switch in embodiments without the second half bridge.

Further, the first half bridge circuit can be used as a step-up converter from the second interface to the first interface, as will be readily apparent to one of ordinary skill in the art.

According to another embodiment, the second half bridge circuit is symmetric to the first half bridge circuit with regard to the choke. The sixth electronic switch is symmetric to the third electronic switch with regard to their drain and source terminals, such that the source terminal of the third electronic switch is connected to the source terminal of the sixth electronic switch.

The second half bridge circuit being symmetric to the first half bridge circuit with regard to the choke means that the fourth electronic switch is symmetric to the first electronic switch concerning their terminals (drain and source) with regard to the choke. Therefore, both switches are connected with their same terminal to the choke. Also, the second electronic switch and the fifth electronic switch are connected to the choke via their same terminal. In particular, the first electronic switch and the fourth electronic switch are both connected to the choke with their source terminal. The second electronic switch and the fifth electronic switch are both connected to the choke (via the first node and the third node, respectively) with their drain terminals. Therefore, with regard to the functional components of the switching circuit (first to sixth electronic switches and choke), the switching circuit is exactly the same, when viewed from the first terminal to the second terminal as when viewed from the second terminal to the first terminal.

According to another embodiment, the first connection line and the second connection line of the first interface are configured to be connected to a positive terminal and a negative terminal of the electrical energy source, respectively. The first connection line and the second connection line are configured to be connected to respective input terminals of the consumer.

According to a second aspect, an aircraft is provided. The aircraft comprises a fuselage, an electrical energy source, a consumer, and a switching circuit according to any one of the embodiments described above. The electrical energy source is connected to the first connection line and the second connection line of the first interface of the switching circuit. The consumer is connected to the first connection line and the second connection line of the second interface of the switching circuit.

The switching circuit may be used to control current flow between the electrical energy source and the consumer according to the principle described above. The electrical energy source may, for example, be a battery, a fuel cell or other DC or AC voltage source. The consumer may, for example, be an electrically driven turbine. However, the electrical energy source may be any electrical energy source on board the aircraft, and the consumer may be any electrical consumer on board the aircraft.

Further, the switching circuit may be used as a circuit for reconfiguring an electrical power grid within the aircraft. For example, the aircraft may comprise a busbar having a plurality of break out boxes. Each such break-out box may comprise a switching circuit for connecting or disconnecting a consumer to the busbar according to the principles described herein.

In summary, the present disclosure provides a switching circuit for connecting an electrical energy source to a consumer that provides effective short-circuit protection and pre-charging functionality. By employing fast electronic switches instead of mechanical contactors, the switching circuit may transition very fast from a short-circuit protection mode (corresponding to a normal operation mode where simultaneously current flow is monitored for detecting short circuits) to a mode where current flow is limited, if a short-circuit occurs. This avoids the electrical energy source from being driven in a short-circuit state. Further, the switching circuit may be used as a reconfiguration circuit for removing and adding electrical consumers from and to an existing power network. Because the functional blocks (switches) are operated purely electronically, their lifetime is prolonged against regular mechanical switches. Additionally, the switching circuit allows for an electrical load being operated under limited but elevated current for a short amount of time, if necessary. Additionally, because no regular ohmic resistors are used to limit current flow but the input and output terminals of the switching/pre-charging circuit, overheating of such resistors is not an issue. Therefore, the switching circuit may be used for repeated pre-charging operations without time and count limitations, which is not possible with current state of the art pre-charging circuits.

Although the present disclosure is described with regard to aircraft applications, it should be noted, that the disclosure may be used for any suitable application, such as for automotive applications, train application, and similar applications where a short circuit protection and/or current limiting / pre-charging functionality and/or reconfiguration of networks is desired.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic view of a prior art switching circuit for pre-charging an electrical load connected to an electrical energy source.
- **Fig. 2**: a schematic view of a switching circuit for operating an electrical consumer in one of a pre-charging operation mode, a current-limiting operation mode and a short-circuit protection mode.
- **Fig. 3**: a schematic view of the switching circuit of Fig. 2, further comprising a symmetrically arranged second half bridge circuit and a second bypass switch for bidirectional operation of the switching circuit.
- **Fig. 4**: a schematic view of an aircraft comprising the switching circuit of Fig. 2 or 3.

### DETAILED DESCRIPTION

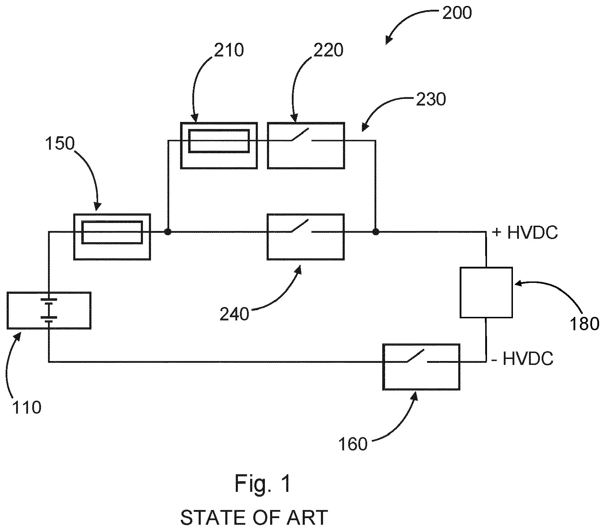

Fig. 1 shows a prior art switching circuit 200 for pre-charging and operation of a consumer 180 connected to an electrical energy source 110. The switching circuit 200 comprises a pre-charge bypass 230 having a pre-charge resistor 210 and a pre-charge contactor 220. A first main contactor 160 can be used to disconnect the consumer 180 from the switching circuit 200. The pre-charge bypass 230 bypasses a second main contactor 240. When the first main contactor 160 and the second main contactor 240 are closed, the consumer 180 is connected directly to the electrical energy source 110. This corresponds to the normal operation mode after the consumer 180 is pre-charged. In order to pre-charge the input capacities of the consumer 180, at the beginning, the first main contactor 160 and the bypass contactor 220 are closed, while the second main contactor 240 stays open. Current flow into the consumer 180 thereby is limited by the pre-charge resistor 210. After the consumer 180 is pre-charged, the second main contactor 240 is closed

Such a switching circuit 200 has the disadvantage that during pre-charging, a lot of energy is dissipated at the pre-charge resistor 210. Multiple pre-charging events may lead to overheating of the pre-charge resistor 210. Therefore, the switching circuit 200 usually is designed for a single pre-charging event. Further, in case of faulty loads of the network, the consumer 180 may not finish pre-charging, leading to constant current flow through the pre-charge resistor 210 and therefore high thermal load. Usually, the pre-charge resistor 210 is not designed for permanent load because it otherwise would become big and heavy. Also, the reaction times of the contactors 220, 240 are very slow in case of a short-circuit event and the fuse 150 also takes some time to blow. During this time, the electrical energy source 110 will be driven in overload.

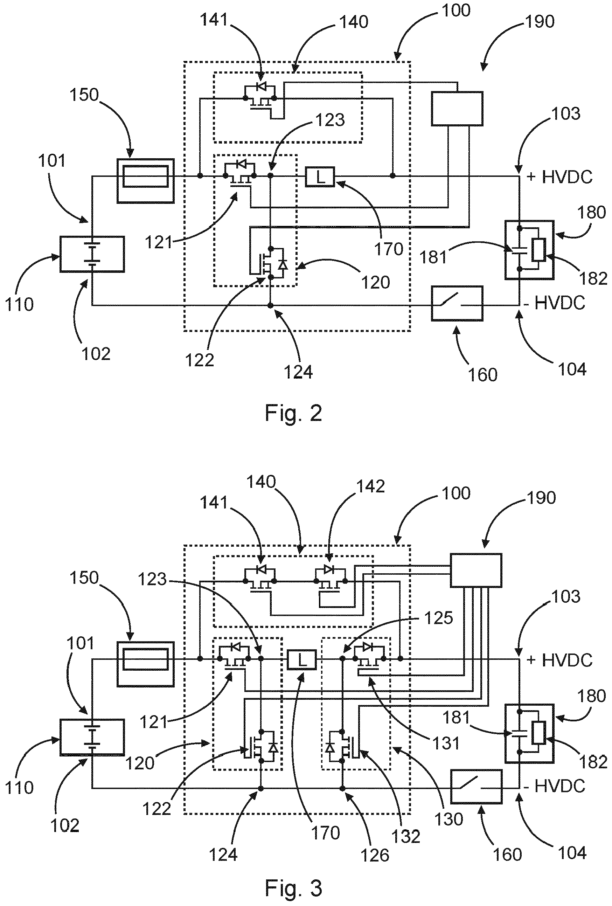

Fig. 2 shows a switching circuit 100 for connecting an electrical energy source 110 to a consumer 180 according to the present disclosure in a unipolar configuration. The switching circuit 100 comprises a first half bridge circuit 120, a bypass circuit 140, a choke 170, a first interface comprising a first connection line 101 and a second connection line 102, and a second interface comprising a first connection line 103 and a second connection line 104. The first half bridge circuit 120 comprises a first electronic switch 121 and a second electronic switch 122. The bypass circuit 140 comprises a third electronic switch 141 that bypasses the first electronic switch 121 and the choke 170. The shown switching circuit 100 further comprises a redundancy fuse 150 and a main contactor 160. However, it should be appreciated that the fuse 150 and the main contactor 160 are optional and not necessary.

A controller 190 is connected to the first, second and third electronic switches 121, 122, 141 and is configured to control the switching states of these electronic switches. The electronic switches 121, 122, 141 may be any fast-switching electronic device. For example, the electronic switches 121, 122, 141 may be MOSFETs, SiC FETs, IGBTS, JFETs or any other suitable electronic switch. The controller 190 may control the switching states by applying a suitable signal to the corresponding gate terminals of the corresponding switches. Each of the electronic switches 121, 122, 141 further comprises parallel connected free-wheeling or protective diodes (either as dedicated components or as part of the corresponding switch itself (body diode)) in order to avoid short circuits, as will be readily apparent to one of ordinary skill in the art.

The first electronic switch 121 and the second electronic switch 122 are connected in series between the first connection line 101 and the second connection line 102 of the first interface. The choke 170 is connected to a first node 123 between the first electronic switch 121 and the second electronic switch 122 on one side, and to the first connection line 103 of the second interface on the other side. The main contactor 160 is connected between a second node 124 and the second connection line 104 of the second interface. In the depicted configuration, the switching circuit 100 is connected to an electrical energy source 110 at the first interface 101, 102. The second interface 103, 104 is connected to a consumer 180.

As an example, a RC load is shown as consumer 180 that might come with an input capacity 181. The main components of the consumer 180, i.e., the functional components of the consumer itself, are indicated by reference sign 182 (consumer functional components 182). At the beginning, when the consumer 180 is connected to the switching circuit 100 by closing the main contactor 160, the input capacity 181 is uncharged. Hence, if now the consumer 180 would be directly connected with the electrical energy source, e.g., by closing the third electronic switch 141 of the bypass circuit, a large inrush current would occur until the input capacity 181 is charged. This may drive the electrical energy source 110 into overload.

In order to avoid driving the electrical energy source 110 into overload, the switching circuit 100 is configured to operate in a pre-charging operation, which corresponds to an operation mode, in which the current flow from the electrical energy source 110 to the consumer 180 is limited. For this, the first half bridge circuit 120 (comprising the first electronic switch 121 and the second electronic switch 122) together with the choke 170 builds a buck or step-down converter that lowers a voltage from the first interface 101, 102 to the second interface 103, 104. In the pre-charging operation mode, the third electronic switch 141 permanently is in a non-conductive or open switching state. Therefore, current can only flow through the buck converter. In the pre-charging operation mode, the first electronic switch 121 and the second electronic switch 122 are periodically opened (transitioned to a non-conductive state) and closed (transitioned to a conductive state) by the controller 190 in an inverse manner. Inversely opening and closing these electronic switches 121, 122 means that at any time, when the first electronic switch 121 is opened, the second electronic switch 122 is closed and vice versa. Thereby, depending on the duty cycle (the relative amount of time within a certain time interval for which the first electronic switch 121 is closed), the amplitude of a current flowing through the buck converter, and therefore through the switching circuit, is limited to a pre-charging threshold associated with the pre-charging duty cycle. This allows for the input capacity 181 to be loaded slowly without overloading the electrical energy source 110 by large inrush currents.

Once the input capacity 181 is fully loaded, a voltage between the first connection line 103 and the second connection line 104 of the second interface becomes equal to a voltage between the first connection line 101 and the second connection line 102 of the first interface. After a sufficiently low voltage difference across the third electronic switch 141 (or a sufficiently low current flow) is reached, the controller 190 is configured to transition the switching circuit 110 from the pre-charging operation mode to a short-circuit protection mode.

The short-circuit protection mode corresponds to the normal operation mode in which the consumer 180 is driven directly by the electrical energy source 110 via the bypass circuit 140. When transitioning to the short-circuit protection mode, the controller 190 closes the third electronic switch 141. The buck converter, by means of the first electronic switch 121 and the second electronic switch 122, can keep operating according to their switching states in the pre-charging operation mode. However, in the short-circuit protection mode, the first electronic switch 121 may instead also be permanently in the conductive state and the second electronic switch 122 may be permanently in the non-conductive state. This is possible because the third electronic switch 141 is an electronic switch having a very low drain-source on resistance (RDS(on)), which corresponds to the resistance between drain and source, when the switch is in the conductive state. Therefore, the resistance of the bypass circuit 140 is much lower than the overall resistance of the buck converter (or rather of the first electronic switch 121 and the choke 170. The second electronic switch 122 is not in the current path when the first electronic switch 121 is closed) and most of the current flows via the bypass circuit 140. In the short-circuit protection mode, an electrical current flowing through the switching circuit 100 is permanently monitored, e.g., by a current sensor. If a peak current higher than the short circuit protection level, and therefore a possible short circuit, is detected, the controller is configured to open the third electronic switch 141 and to operate the first electronic switch 121 and the second electronic switch 122 according to the pre-charging operation mode (or the current-limiting operation mode described further below), thereby transitioning the switching circuit 100 back to the pre-charging operation mode (or the current-limiting operation mode, respectively) in which current flow is limited. Compared to prior art solutions, this switching may occur very fast because it is achieved purely by fast-switching electronic switches. This effectively avoids operating the electrical energy source in a short circuited state.

Further, the switching circuit 100 may be operable in a current-limiting operation mode, which is basically the same as the pre-charging operation mode but with a higher current threshold. The pre-charging operation mode and the current-limiting operation mode are only distinguished by the current amplitude that is allowed to pass. However, the pre-charging operation mode can be operated permanently while the current-limiting operation mode is only possible for a relatively short amount of time without causing damage to the switching circuit 100. The current-limiting operation mode may, for example, be used to allow the consumer 180 to keep operating with limited but still higher current than the pre-charging current for a short amount of time when faults are detected, thereby avoiding immediate drop out of the consumer. For example, if a peak current higher than the short circuit detection level is detected and such immediate drop out is to be avoided, the switching circuit 100 may first transition to the current-limiting operation mode and start a timer. Once the allowed time is expired, the switching circuit 100 may transition to the pre-charging operation mode.

It should be noted that the current-limiting operation mode is optional. The switching circuit 100 may also only be operated in the pre-charging operation mode and the short-circuit protection mode. Further, it should be noted that additional operation modes with differing current limits may be implemented.

Additionally to the pre-charging and short-circuit protection functionalities, the switching circuit 100 may be used as a reconfiguration circuit, for example in break-out boxes of busbars or other electrical network components where consumers may need to be removed and added to the electrical network. In particular, in the pre-charging operation mode, because of the limited current flow, the main contactor 160 can be safely opened without switching of the contactor under high load. The same occurs during starting up of the consumer 180 in the pre-charging operation mode.

Fig. 3 shows a switching circuit 100 for connecting an electrical energy source 110 to a consumer 180 according to the present disclosure in a bipolar configuration. The switching circuit 100 of Fig. 3 differs from the switching circuit 100 of Fig. 2 in that it further comprises a second half bridge circuit 130, having a fourth electronic switch 131 and a fifth electronic switch 132, and in that the bypass circuit 140 further comprises a sixth electronic switch 142 connected in series with the third electronic switch 141. Whereas the switching circuit 100 of Fig. 2 only allows energy flow in one direction (from the first interface 101, 102 to the second interface 103, 104), the switching circuit 100 of Fig. 3 can be operated bidirectional.

The fourth to sixth electronic switches 131, 132, 142 may be similar or identical to the first to third electronic switches 121, 122, 141. In particular, the sixth electronic switch 142 also is a very low RDS(on) electronic switch. The second half bridge circuit 130 is symmetrical to the first half bridge circuit 120 with regard to a vertical centerline defined by the choke 170. The sixth electronic switch 142 is symmetric to the third electronic switch 141 with regard to their drain and source terminals, such that the source terminal the third electronic switch 141 is connected to the source terminal of the sixth electronic switch 142. The same holds for the fourth electronic switch 131 with regard to the first electronic switch 121. The fourth electronic switch 131 is connected between a third node 125 and the first connection line 103 of the second interface. The fifth electronic switch 132 is connected between the third node 125 and a fourth node 126, wherein the third node 125 is arranged between the second node 124 and the main contactor 160. Further, the free-wheeling diodes or body diodes of the fourth and sixth electronic switches 131, 142 are opposite in their forward direction with regard to the first and third electronic switches 121, 141. This arrangement of the switches with regard to each other provides a switching circuit 100 which is exactly the same, when viewed from the first terminal to the second terminal (regarding current flow) as when viewed from the second terminal to the first terminal with regard to the functional components of the switching circuit 100 (first to sixth electronic switches 121, 122, 141, 131, 132, 142 and choke 170).

The switching circuit 100 of Fig. 3 may operate in both directions but in the same way as described with regard to the switching circuit of Fig. 2. For example, if the electrical energy source 110 is a rechargeable energy storage, such as a rechargeable battery, and the consumer 180 is a combined motor-generator unit, the switching circuit 100 may be used to control energy flow from the electrical energy source 110 to the consumer 180, when the motor-generator unit is operated in a motoring mode. When the motor-generator unit is operated in a generating mode for recharging the battery, the switching circuit may be used to control energy flow from the consumer 180 to the electrical energy source 110.

If the switching circuit 100 is configured to conduct electrical power from the first interface 101, 102 to the second interface 103, 104 and the voltage at the first interface 101, 102 is higher than the voltage at the second interface 103, 104, the fourth electronic switch 131 permanently is in the conductive state, and the fifth electronic switch 132 permanently is in the non-conductive state. The sixth electronic switch 142 is in the same switching state as the third electronic switch 141 at any time. The first to third electronic switch 121, 122, 141 may then be controlled as described above with regard to the switching circuit 100 of Fig. 2. If, however, the voltage at the first interface101, 102 is lower than the voltage at the second interface 103, 104, the switching circuit 100 may instead be operated as a step-up converter. In this case, the first electronic switch 121 permanently is in the conductive state, and the second electronic switch 122 permanently is in the non-conductive state. The third electronic switch 141 again is in the same switching state as the sixth electronic switch 142 at any time. The fourth to sixth electronic switch 131, 132, 142 may then be controlled just as the first to third electronic switch 121, 122, 141 with regard to the switching circuit 100 of Fig. 2.

If the switching circuit 100 is configured to conduct electrical power from the second interface 103, 104 to the first interface 101, 102 and the voltage at the second interface 103, 104 is higher than the voltage at the first interface 101, 102, the first electronic switch 121 permanently is in the conductive state, and the second electronic switch 122 permanently is in the non-conductive state. The third electronic switch 141 is in the same switching state as the sixth electronic switch 141 at any time. The fourth to sixth electronic switch 131, 132, 142 may then be controlled just as the first to third electronic switch 121, 122, 142 with regard to the switching circuit 100 of Fig. 2. If, however, the voltage at the second interface 103, 104 is lower than the voltage at the first interface 101, 102, the switching circuit 100 may instead be operated as a step-up converter. In this case, the fourth electronic switch 131 permanently is in the conductive state, and the fifth electronic switch 132 permanently is in the non-conductive state. The sixth electronic switch 142 again is in the same switching state as the third electronic switch 141 at any time. The first to third electronic switch 121, 122, 141 may then be controlled just as described with regard to Fig. 2.

In this way, the switching circuit 100 can operate similarly to the switching circuit 100 of Fig. 2 but with reversed current flow directions.

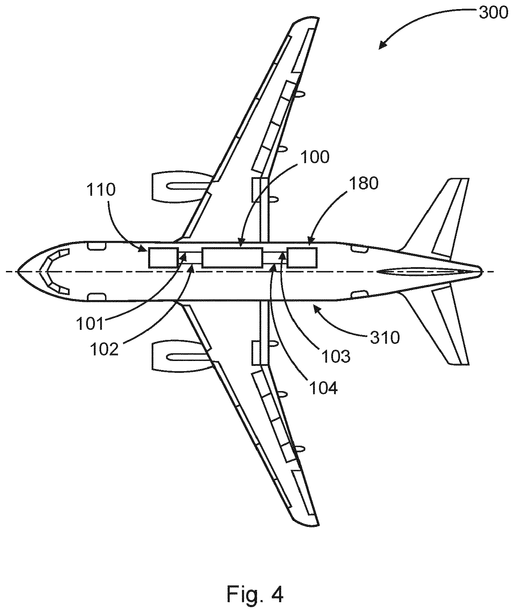

Fig. 4 shows an aircraft 300 having a fuselage 310. The aircraft comprises an electrical energy source 110 and a consumer 180 within the fuselage 310 which are connected by means of the switching circuit 100 of Fig. 2 or Fig. 3. Current flow between the electrical energy source 110 and the consumer 180 may be controlled according to the principles described above.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: switching circuit
- 101: positive input terminal
- 102: negative input terminal
- 103: positive output terminal
- 104: negative output terminal
- 110: electrical energy source
- 120: first half bridge circuit
- 121: first electronic switch, first solid-state switch
- 122: second electronic switch, second solid-state switch
- 123: first node
- 124: second node
- 125: third node
- 126: fourth node
- 130: second half bridge circuit
- 131: fourth electronic switch, fourth solid-state switch
- 132: fifth electronic switch, fifth solid-state switch
- 140: bypass circuit
- 141: third electronic switch, third solid-state switch
- 142: sixth electronic switch
- 150: fuse
- 160: first main contactor
- 170: choke
- 180: consumer
- 181: input capacity
- 182: consumer functional components
- 190: controller

- 200: state of art switching circuit
- 210: pre-charge resistor
- 220: pre-charge contactor
- 230: pre-charge bypass
- 240: second main contactor

- 300: aircraft
- 310: fuselage

## Claims

1. Switching circuit (100) for connecting an electrical energy source (110) to a consumer (180), comprising:
a controller (190);
a first interface (101, 102) with a first connection line (101) and a second connection line (102);
a second interface (103, 104) with a first connection line (103) and a second connection line (104);
a first half bridge circuit (120);
a bypass circuit (140); and
a choke (170);
wherein the first half bridge circuit (120) comprises a first electronic switch (121) and a second electronic switch (122) connected in series between the first connection line (101) and
the second connection line (102) of the first interface (101, 102);
wherein the choke (170) is connected to a first node (123) between the first electronic switch (121) and the second electronic switch (122), and connects the first node (123) to the first connection line (103) of the second interface (103, 104), such that the first electronic switch (121), the second electronic switch (122) and the choke (170) together build a buck converter;
wherein the second connection line (104) of the second interface (103, 104) is connected to a second node (124) between the second electronic switch (122) and the second connection line (102) of the first interface (101, 102);
wherein the bypass circuit (140) comprises a third electronic switch (141) that bypasses the first electronic switch (121) and the choke (170), thereby interconnecting the first connection line (101) of the first interface (101, 102) and the first connection line (103) of the second interface (103, 104);
wherein the controller (121) is connected with each of the first to third electronic switches (121, 122, 141) and is configured to control operation of the electronic switches (121, 122, 141), such that the switching circuit (100) operates in one of a pre-charging operation mode, a current-limiting operation mode, and a short-circuit protection mode.

2. The switching circuit (100) of claim 1, wherein, when in the pre-charging operation mode, the controller (190) is configured to operate the third electronic switch (141) in an electrically non-conductive state and simultaneously open and close the first electronic switch (121) and the second electronic switch (122) inversely to each other with a pre-charging duty cycle, so that a current flowing through the switching circuit (100) between the first interface (101, 102) and the second interface (103, 104) is limited to a pre-charging threshold;
wherein, when in the current-limiting operation mode, the controller (190) is configured to operate the third electronic switch (141) in an electrically non-conductive state and simultaneously open and close the first electronic switch (121) and the second electronic switch (122) inversely to each other with a current-limit duty cycle, so that a current flowing through the switching circuit (100) between the first interface (101, 102) and the second interface (103, 104) is limited to a current-limit threshold;
wherein the current-limit threshold is higher than the pre-charging threshold; and
wherein, when in the short-circuit protection mode, the controller (190) is configured to operate the third electronic switch (141) in an electrically conductive state and to operate the first electronic switch (121) and the second electronic switch (122) in a corresponding switching state according to one of the pre-charging operation mode and the current-limiting operation mode.

3. The switching circuit (100) of claim 1 or 2, wherein, the controller (190) is configured to start in the pre-charging operation mode and to transition from the pre-charging operation mode to the short-circuit protection mode when a voltage between the first connection line (103) and the second connection line (104) of the second interface (103, 104) becomes equal to a voltage between the first connection line (101) and the second connection line (102) of the first interface (101, 102).

4. The switching circuit (100) of any one of the preceding claims, wherein, when in the short-circuit protection mode, the controller (190) is configured to transition to the pre-charging operation mode when a current through the switching circuit (100) reaches a short-circuit threshold.

5. The switching circuit (100) of any one of the preceding claims, wherein, when in the short-circuit protection mode, the controller (190) is configured to transition to the current-limiting operation mode and remain in the current-limiting operation mode up to a predefined time limit, when a current through the switching circuit (100) reaches a defined current threshold.

6. The switching circuit (100) of any one of the preceding claims, wherein at least one of the first electronic switch (121), the second electronic switch (122) and the third electronic switch (141) is a solid-state switch.

7. The switching circuit (100) of claim 6, wherein the solid-state switch comprises a metal-oxide-semiconductor field-effect transistor, MOSFET.

8. The switching circuit (100) of claim 7, wherein the solid-state switch comprises a silicon carbide field-effect transistor, SiC FET.

9. The switching circuit (100) of claim 6, wherein the solid-state switch comprises an insulated gate bipolar transistor, IGBT.

10. The switching circuit (100) of any one of the preceding claims, wherein the third electronic switch (141) comprises a transistor having a very low drain-source on resistance, RDS(on).

11. The switching circuit (100) of any one of the preceding claims, further comprising a second half bridge circuit (130) comprising a fourth electronic switch (131) and a fifth electronic switch (132); and
the bypass circuit (140) further comprising a sixth electronic switch (142) in series with the third electronic switch (141);
wherein the fourth electronic switch (131) is connected between the choke (170) and the first connection line (103) of the second interface (103, 104);
wherein the fifth electronic switch (132) connects a third node (125) between the choke (170) and the fourth electronic switch (131) with a fourth node (126) between the second connection line (104) of the second interface (103, 104) and the second node (124);
wherein the bypass circuit (140) further bypasses the fourth electronic switch (131); and wherein the controller (190) further is configured to control operation of the fourth electronic switch (131), the fifth electronic switch (132) and the sixth electronic switch (142).

12. The switching circuit (100) of claim 11, wherein the second half bridge circuit (130) is symmetric to the first half bridge circuit (120) with regard to the choke (170); and
wherein the sixth electronic switch (142) is symmetric to the third electronic switch (141) with regard to their drain and source terminals, such that the source terminal of the third electronic switch (141) is connected to the source terminal of the sixth electronic switch (142).

13. The switching circuit (100) of any one of the preceding claims, wherein the first connection line (101) and the second connection line (102) of the first interface (101, 102) are configured to be connected to a positive terminal and a negative terminal of the electrical energy source (110), respectively; and
wherein the first connection line (103) and the second connection line (104) are configured to be connected to respective input terminals of the consumer (180).

14. An aircraft (300), comprising:
a fuselage (310);
an electrical energy source (110);
a consumer (180); and
a switching circuit (100) of any one of the preceding claims;
wherein the electrical energy source (110) is connected to the first connection line (101) and
the second connection line (102) of the first interface (101, 102) of the switching circuit (100); and
wherein the consumer (180) is connected to the first connection line (103) and the second connection line (104) of the second interface (103, 104) of the switching circuit (100).
